# EUROPÄISCHE PATENTSCHRIFT

(11) **EP 1 950 121 B1**
(45) Veröffentlichungstag und Bekanntmachung des Hinweises auf die Patenterteilung: **27.10.2010**
(21) Anmeldenummer: 08150536.4
(22) Anmeldetag: 23.01.2008
(51) Int. Cl.: B62D 5/04

(54) **Betriebsverfahren für ein Fahrzeug-Lenksystem mit einem Elektromotor zur Hilfskraftunterstützung**
Method for operating an automobile steering system with an electromotor for power supprt
Procédé de fonctionnement pour un système de direction d'un véhicule doté d'un moteur électrique destiné à une direction assistée

(30) Priorität: 26.01.2007 DE 102007003978
(43) Veröffentlichungstag der Anmeldung: 30.07.2008
(73) Patentinhaber: Bayerische Motoren Werke Aktiengesellschaft, 80809 München (DE)
(72) Erfinder: Weisshuhn, Andreas, 80636 München (DE); Mai, Alexander, 80807 München (DE); Otasevic, Aleksandar, 81667 München (DE)

(56) Entgegenhaltungen:
- DE-A- 10 231 556
- DE-A1- 10 216 184
- DE-A1- 10 232 295
- DE-A1- 10 318 505
- DE-A1-102006 010 590
- DE-A1-102006 011 480
- US-A1- 2004 148 075

## Beschreibung

Die Erfindung betrifft ein Betriebsverfahren für ein Fahrzeug-Lenksystem mit einem Elektromotor zur Hilfskraftunterstützung, wobei der Elektromotor die benötigte elektrische Energie aus dem elektrischen Bordnetz des Fahrzeugs bezieht, das von einem vom Antriebsaggregat des Fahrzeugs angetriebenen Generator versorgt wird und einen Akkumulator aufweist, und wobei im Falle eines vorhersehbaren Lenkvorgangs ein anderer an das elektrische Bordnetz angeschlossener Verbraucher abgekoppelt wird und/oder die Leistungsabgabe des Generators erhöht wird.

Elektromotorisch unterstützte Fahrzeug-Lenksysteme sind auch unter dem Begriff "EPS" (= Electric Power Steering / elektrische Servolenkung) grundsätzlich bekannt. Dabei hat ein solches Lenksystem bei Fahrzeugstillstand und insbesondere bei aktivierter Betriebsbremse in Verbindung mit hohen Lenkwinkelgeschwindigkeiten, wie dies insbesondere bei Einpark- oder Wendemanövern der Fall ist, den größten elektrischen Leistungsbedarf. In diesen Betriebszuständen wird jedoch das Fahrzeug-Antriebsaggregat, bei dem es sich insbesondere um eine Brennkraftmaschine handeln kann und welches auch einen elektrischen Generator zur Versorgung des elektrischen Bordnetzes des Fahrzeugs mit elektrischer Energie antreibt, mit geringer Last betrieben, so im Falle einer Brennkraftmaschine diese bspw. im Leerlauf.

Es ist bekannt, dass zur Stabilisierung der Leerlaufqualität bzw. allgemein zum Stabilisieren des Betriebs des Fzg.-Antriebsaggregats mit nur geringer Last der Momentenbedarf des Generators bei dynamischen Belastungen des Bordnetzes durch elektrische Verbraucher begrenzt werden muss; wie dem Fachmann bekannt ist mittels sog. "Load Response". Diese Begrenzung hinsichtlich einer Änderung der Leistungsanforderung des Generators hat zur Folge, dass eine plötzliche Steigerung der elektrischen Leistungsanforderung im Bordnetz zunächst nur vom Akkumulator bedient werden kann, was jedoch im Hinblick auf die Stabilität des elektrischen Bordnetzes abermals zu beschränken ist, d.h. elektrische Verbraucher dürfen aus dem Bordnetz nur eine beschränkte höhere Leistung abrufen. Dies hat zur Folge, dass bspw. der Elektromotor des Lenksystems in einem solchen Fall nicht die benötigte Leistung erhält und somit nicht das gewünschte Unterstützungsmoment für einen Lenkvorgang, insbesondere bei Einpark- oder WendeManövern, zur Verfügung stellen kann.

Aus der US 2004/014875 A1 ist es bekannt, dass dann, wenn vorhersehbar ist, dass der Elektromotor eines Lenksystems eine höhere Leistung benötigt, ein anderer elektrischer Verbraucher abgeschaltet wird oder der elektrische Generator angewiesen wird, eine höhere elektrische Spannung zu erzeugen. Die letztgenannte Maßnahme ist in der Praxis jedoch nicht durchführbar, wenn die geforderte höhere Generator-Leistung die im vorhergehenden Absatz erläuterte übliche Begrenzung einer Änderung der Generator-Leistung überschreitet. Die erstgenannte Maßnahme hingegen, nämlich das Abschalten eines anderen elektrischen Verbrauchers, ist nur dann durchführbar, wenn ein solcher elektrischer Verbraucher, auf den gefahrlos verzichtet werden kann, zuvor überhaupt in Betrieb war.

Daher ist es Aufgabe der vorliegenden Erfindung, ein demgegenüber verbessertes Betriebsverfahren nach dem Oberbegriff des Anspruchs 1 aufzuzeigen.

Die Lösung dieser Aufgabe ist dadurch gekennzeichnet, dass im Falle eines bevorstehenden Lenkvorgangs und einer durch das Antriebsaggregat verursachten Begrenzung der Änderung der Leistungsanforderung des Generators im Bordnetz zunächst ein gewisses Maß von elektrischer Verlustleistung angefordert und erzeugt wird, welche im wesentlichen durch den Generator ausgeglichen wird, indem dieser ein entsprechendes Mehr an elektrischer Leistung erzeugt, wobei die Betriebsweise des Antriebsaggregats entsprechend nachgeregelt wird, und dass im wesentlichen mit Beginn des Lenkvorgangs die weitere Verlustleistung nicht weiter angefordert wird, so dass der Generator eine entsprechend höhere elektrische Leistung für den Elektromotor des Lenksystems bereit stellen kann.

Grundsätzlich möglich ist es, einen bevorstehenden Lenkvorgang mit ausreichender Wahrscheinlichkeit vorherzusagen; hierzu wird nur bspw. auf die DE 102 32 295 A1 verwiesen, in der ein Verfahren zur Unterstützung des Fahrers bei Fahrmanövern, insbesondere Einpark-Vorgängen, beschrieben ist. Verwiesen werden kann aber auch auf die DE 102 31 556 A1, die ein Verfahren und eine Vorrichtung zur Prädiktion von Bewegungstrajektorien von Objekten, insbesondere Fahrzeugen, zum Inhalt hat. Weitere Möglichkeiten zur Vorhersage eines bevorstehenden Lenkvorgangs sowie in Verbindung hiermit zu ergreifende Maßnahmen sind in unseren nicht vorveröffentlichten Paientanmeldungen WO2008/055512, WO2008/064700 und WO2008/064702 beschrieben. Grundsätzlich und unabhängig von dieser Vorbeschreibung kann ein bevorstehender Lenkvorgang auch anhand gewisser Randbedingungen oder Bewegungsmuster des Fahrzeugs abgeleitet werden. Hierzu zählt die Inbetriebnahme eines Fahrtrichtungsanzeigers (= Setzen des "Blinklichts"), aber auch ein festgestelltes Lenken im FahrzeugStillstand. Berücksichtigung finden können ferner Signale eines für Parkiervorgänge vorgesehenen Abstands-Mess- und Warn-Systems, ferner Informationen aus einem Navigationssystem und vieles mehr.

Wenn nun durch eine geeignete elektronische Steuereinheit erkannt wird, dass ein hinsichtlich des Leistungsbedarfs kritischer Lenkvorgang entsprechend obiger Schilderung bevorsteht, so wird erfindungsgemäß eine geringe Zeit (bspw. in der Größenordnung von wenigen Sekunden) vor dem Stattfinden des eigentlichen Lenkmanövers ein gewisses Maß von Verlustleistung im elektrischen Bordnetz angefordert bzw. erzeugt. Aufgrund dieser Anforderung/Erzeugung von Verlustleistung wird der Generator noch vor dem Auftreten des eigentlichen Lenkmanövers diese Verlustleistung ausregeln, d.h. ein entsprechendes Mehr an elektrischer Leistung erzeugen, ohne dass hierdurch der Betrieb des Fzg.-Antriebsaggregats beeinträchtigt wird bzw. es kann einfach die Betriebsweise des Fzg.-Antriebsaggregats so nachgeregelt werden, dass der Generator die geforderte höhere elektrische Leistung abgeben kann. Anschließend wird im wesentlichen zeitgleich mit dem Auftreten eines erhöhten elektrischen Leistungsbedarfs durch das nunmehr tatsächlich stattfindende Lenkmanöver diese genannte Verlustleistung zurückgefahren, d.h. abgebaut bzw. nicht weiter angefordert. Nachdem dann der Generator bereits eine die vorherige Verlustleistung kompensierende elektrische Leistung liefert, wird nunmehr das elektrische Bordnetz dynamisch nur mit der Differenz des Leistungsbedarfs aus dem besagten Lenkmanöver abzüglich der bereits vorgehaltenen Verlustleistung belastet. Somit steht für die Durchführung dieses Lenkmanövers eine höhere elektrische Leistung am Elektromotor des Lenksystems und somit für den Fahrer des Fahrzeugs ein entsprechend höheres von diesem Elektromotor bereit gestelltes Moment zur Verfügung.

Grundsätzlich kann die Verlustleistung im elektrischen Bordnetz auf unterschiedliche Weise "erzeugt" bzw. abgerufen werden, bspw. durch Zuschalten eines elektrischen Heizwiderstands (bspw. der Fzg.-Heckscheibenheizung) oder dgl., besonders einfach, schnell ansprechend und daher vorteilhaft ist es jedoch, wenn die elektrische Verlustleistung im Elektromotor des Lenksystems selbst als Blindleistung erzeugt wird, insbesondere aufgrund entsprechender Phasenverschiebung.

Schließlich kann dann, wenn zwar ein Lenkmanöver vorhergesehen und somit Verlustleistung im Sinne der vorliegenden Erfindung erzeugt wurde, tatsächlich danach jedoch kein entsprechender Lenkvorgang erfolgt(e), die Erzeugung der Verlustleistung nach Ablauf einer gewissen Zeitspanne eingestellt werden, wobei noch darauf hingewiesen sei, dass durchaus eine Vielzahl von Details abweichend von obigen Erläuterungen gestaltet sein kann, ohne den Inhalt der Patentansprüche zu verlassen. Im Wesentlichen können durch einen hier vorgeschlagenen sog. "Leistungsvorhalt" am Generator, der durch Anlegen einer elektrischen Verlustleistung erzeugt wird, mehrere günstige Effekte erzielt werden, nämlich neben einer Erhöhung der Verfügbarkeit von hoher Lenkunterstützungsleistung eine Vermeidung von Leistungsdegradation aufgrund niedriger Bordnetzspannung und insbesondere auch eine Stabilisierung der elektrischen Spannung im Fahrzeug-Bordnetz. Weiterhin können hiermit solche Betriebszustände des Fzg.-Antriebsaggregats, in denen dieses lediglich eine begrenzte Änderung in der Leistungsanforderung des Generators akzeptieren kann, so bspw. der Leerlaufbereich einer Brennkraftmaschine, stabiler gestaltet werden.

## Patentansprüche

1. Betriebsverfahren für ein Fahrzeug-Lenksystem mit einem Elektromotor zur Hilfskraftunterstützung, wobei der Elektromotor die benötigte elektrische Energie aus dem elektrischen Bordnetz des Fahrzeugs bezieht, das von einem vom Antriebsaggregat des Fahrzeugs angetriebenen Generator versorgt wird und einen Akkumulator aufweist, und wobei im Falle eines vorhersehbaren Lenkvorgangs ein anderer an das elektrische Bordnetz angeschlossener Verbraucher abgekoppelt wird und/oder die Leistungsabgabe des Generators erhöht wird,
**dadurch gekennzeichnet, dass** im Falle eines bevorstehenden Lenkvorgangs und einer durch das Antriebsaggregat verursachten Begrenzung der Änderung der Leistungsanforderung des Generators im Bordnetz zunächst ein gewisses Maß von elektrischer Verlustleistung angefordert und erzeugt wird, welche im wesentlichen durch den Generator ausgeglichen wird, indem dieser ein entsprechendes Mehr an elektrischer Leistung erzeugt, wobei die Betriebsweise des Antriebsaggregats entsprechend nachgeregelt wird, und dass im wesentlichen mit Beginn des Lenkvorgangs die weitere Verlustleistung nicht weiter angefordert wird, so dass der Generator eine entsprechend höhere elektrische Leistung für den Elektromotor des Lenksystems bereit stellen kann.

2. Betriebsverfahren nach Anspruch 1,
**dadurch gekennzeichnet, dass** die elektrische Verlustleistung im Elektromotor des Lenksystems als Blindleistung erzeugt wird.

3. Betriebsverfahren nach Anspruch 1 oder 2,
**dadurch gekennzeichnet, dass** nach Ablauf einer gewissen Zeitspanne auch dann keine weitere Verlustleistung angefordert wird, wenn kein Lenkvorgang begonnen wurde.

## Claims

1. An operating method for a vehicle steering system with an electric motor for auxiliary power assistance, the electric motor obtaining the required electric energy from the electrical system of the vehicle, which is supplied by a generator driven by the drive assembly of the vehicle and has an accumulator, and wherein in the event of a foreseeable steering operation, another load connected to the electrical system is decoupled and/or the power output of the generator is increased, **characterised in that** in the event of an imminent steering operation and a limitation caused by the drive assembly in the change in the power requirement of the generator in the electrical system, a certain amount of electric power dissipation is firstly demanded and produced, which is substantially compensated by the generator, **in that** the latter produces a corresponding excess of electric power, the operating mode of the drive assembly being correspondingly readjusted and **in that** the further power dissipation is no longer demanded substantially with the start of the steering operation, so the generator can provide correspondingly higher electric power for the electric motor of the steering system.

2. An operating method according to claim 1, **characterised in that** the electric power dissipation in the electric motor of the steering system is produced as reactive power.

3. An operating method according to claim 1 or claim 2, **characterised in that** after the expiry of a certain time span, no further power dissipation is demanded either if no steering operation is started.

## Revendications

1. Procédé de gestion d'un système de direction de véhicule équipé d'un moteur électrique d'assistance,
selon lequel
le moteur électrique prélève l'énergie électrique nécessaire dans le réseau électrique embarqué du véhicule alimenté par un générateur entraîné par l'unité motrice du véhicule et comportant un accumulateur, et
en cas de manoeuvre prévisible de direction, un autre utilisateur raccordé au réseau électrique embarqué est découplé et/ou la puissance fournie par le générateur est augmentée,
**caractérisé en ce qu'**
en cas de manoeuvre de direction prévisible et d'une limitation de la variation de la demande de puissance du générateur, limitation engendrée par l'unité motrice, dans le réseau embarqué, on demande tout d'abord une certaine mesure de la puissance électrique perdue et on la génère, celle-ci sera compensée principalement par le générateur fournissant de façon correspondante plus de puissance électrique,
le fonctionnement de l'unité motrice étant asservi de façon correspondante, et
en principe, au début de la manoeuvre de direction, la perte de puissance future n'est plus demandée de sorte que le générateur peut fournir plus de puissance électrique au moteur électrique du système de direction.

2. Procédé de gestion selon la revendication 1,
**caractérisé en ce que**
la puissance électrique perdue est générée dans le moteur électrique du système de guidage comme puissance réactive.

3. Procédé de gestion selon la revendication 1 ou 2,
**caractérisé en ce qu'**
à la fin d'une période déterminée, aucune autre puissance perdue n'est demandée si aucune opération de guidage a commencé.
